# EUROPEAN PATENT SPECIFICATION

(11) **EP 4 577 388 B1**
(45) Date of publication and mention of the grant of the patent: **07.10.2026**
(21) Application number: 23757943.8
(22) Date of filing: 22.08.2023
(51) Int. Cl.: B27N 3/00, C09J 197/02, C09J 191/00

(54) **ADHESIVE COMPOSITIONS, AND THEIR USE FOR MANUFACTURING WOODBASED COMPOSITES, FIBREGLASS OR ROCK WOOL INSULATIONS, OR WOVEN OR NON-WOVEN FIBRE MATS FOR COMPRESSION MOLDING**
KLEBSTOFFZUSAMMENSETZUNGEN UND IHRE VERWENDUNG ZUR HERSTELLUNG VON HOLZWERKSTOFFEN, FASER- ODER STEINWOLLEDÄMMEN ODER GEWEBTEN ODER NICHTGEWEBTEN FASERMATTEN FÜR DAS FORMPRESSEN
COMPOSITIONS ADHÉSIVES ET LEUR UTILISATION POUR LA FABRICATION DE COMPOSITES À BASE DE BOIS, D'ISOLANTS EN FIBRE DE VERRE OU DE LAINE DE ROCHE, OU DE NAPPES DE FIBRES TISSÉES OU NON

(30) Priority: 22.08.2022 EP 22382795
(43) Date of publication of application: 02.07.2025
(73) Proprietor: FORESA TECHNOLOGIES, S.L.U., 36650 Caldas de Reis Pontevedra (ES)
(72) Inventor: CASTRO MENDEZ, Yabil, 36650 PONTEVEDRA (ES); VIZ RODRIGUEZ, Felipe, 36650 PONTEVEDRA (ES); LOPEZ-SUEVOS FRAGUELA, Francisco, 36650 PONTEVEDRA (ES); FERNANDEZ FONDEVILA, Luciano, 36650 PONTEVEDRA (ES)
(74) Representative: Balder IP Law, S.L.
(86) International application number: PCT/EP2023/073015
(87) International publication number: WO 2024/042067

(56) References cited:
- EP-A1- 4 047 071
- AMARI MEDJDA ET AL: "Synthesis of Green Adhesive with Tannin Extracted from Eucalyptus Bark for Potential Use in Wood Composites", vol. 9, no. 3, 1 January 2021 (2021-01-01), pages 463 - 475, XP093015685, ISSN: 2164-6341, Retrieved from the Internet <URL:http://dx.doi.org/10.32604/jrm.2021.013680> DOI: 10.32604/jrm.2021.013680
- CESPRINI EMANUELE ET AL: "Development of Quebracho (Schinopsis balansae) Tannin-Based Thermoset Resins", POLYMERS, vol. 13, no. 24, 16 December 2021 (2021-12-16), CH, pages 4412, XP093015744, ISSN: 2073-4360, DOI: 10.3390/polym13244412

## Description

### FIELD OF THE INVENTION

The present invention describes novel formaldehyde-free adhesive compositions comprising at least one bio-based adhesive from a renewable resource, adhesive systems comprising, isolated one of another, an adhesive composition (component A) and at least one hardener agent (component B), as well as an adhesive mixture comprising both the adhesive composition and the at least one hardener agent. In particular, adhesive compositions, systems and mixtures described in this document can be used for manufacturing wood composite boards such as wood fibreboards, particleboards, chipboards, oriented strand boards, plywood and paperboards, but also of fibreglass insulations or rock wool insulations, or woven or non-woven fibre mats for compression molding and the resulting composites.

### BACKGROUND OF THE INVENTION

Currently, the great majority of industrial wood products are reconstituted materials that are held together by synthetic thermosetting adhesives. The resins used to bind them are in general formaldehyde-based adhesives. However, environmental and health considerations have prompted the introduction of more severe standards regarding the emission of formaldehyde from bonded wood products and, therefore, the development and use of adhesives from renewable resources for the production of environmentally friendly adhesives is receiving an increasing attention nowadays.

Thus, carbohydrates from different natural resources have been used as wood adhesive in the form of polysaccharides, gums, oligomers and monomeric sugars. These carbohydrates may be used directly as wood adhesive or, alternatively, may be transformed into furanic resins by acid degradation. Carbohydrate adhesives may be obtained from different renewable resources. In particular, waste vegetable materials may be used to obtain furanic resins [A. Pizzi, J. Adhesion Sci. Technol, Vol. 20, No 8, pp 829-846 (2006*)*]; whereas crab and shrimp shells may be used as a natural resource of chitin, which may be derived to chitosan from deacetylation. Chitosan is a copolymer of β-(1,4)-linked 2-acetamido-2-deoxy-D-glucopyranoses and 2-amino-2-deoxy-D-glucopyranoses which has been also described as bio-adhesive in wood manufacturing *[*Ji Xiaodi et al, Royal Society Open Science, 5(4), 172002/1-172002/11 (2018*)].*

Plant protein is another natural resource to produce environmentally friendly adhesives for wood manufacturing. Several studies have been conducted providing protein-based adhesives derived from different crops such as soy, canola, cottonseed, wheat gluten, zein and peas. In particular, acceptable results have been reported by using soy proteins-based adhesives added to traditional synthetic wood adhesive or after partial hydrolysis and modifications of the soy protein [Fatemeh Ferdosian, et al.; Polymers, 9, 70 (2017*);* A. Pizzi, J. Adhesion Sci. Technol, Vol. 20, No 8, pp 829-846 (2006*)*].

Compounds of phenolic nature such as, for example, condensed tannins or lignin may also be used as bio-adhesive in wood manufacturing. These polyphenolic based adhesives may be obtained from renewable feedstock, in particular, from vegetable biomass. Thus, condensed tannins and their flavonoid precursors are known for their wide distribution in nature and particularly for their substantial concentration in the wood and bark of various trees. These include various Acacia (wattle or mimosa), Schinopsis (quebracho), Tsuga (hemlock), Rhus (sumach), Pinus (pine), Carva illinoinensis (pecan) and Pseudotsuga mesiesii (Douglas fir) species. Lignin adhesives have probably been the most intensely researched one as regards wood adhesives applications, since this phenolic material are abundant in nature and of low cost [Fatemeh Ferdosian, et al.; Polymers, 9, 70 (2017*);* A. Pizzi, J. Adhesion Sci. Technol, Vol. 20, No 8, pp 829-846 (2006*)*].

Unsaturated vegetable oils such as linseed oil have also been used in producing wood adhesives by epoxidation of the oil double bonds followed by cross-linking with a cyclic polycarboxylic acid anhydride to build up molecular weight. Due to its dual nature, phenolic nuclei plus unsaturated fatty acid chain, cardanol, which may be found in cashew nut shell liquid, is also a potential natural raw material for the synthesis of water-resistant resins and polymers for wood manufacturing [A. Pizzi, J. Adhesion Sci. Technol, Vol. 20, No 8, pp 829-846 (2006*)*].

Amari et al., Journal of Renewable Materials, 9, 2021, 463-475 describes an aqueous adhesive composition for wood composites, comprising an adhesive polyflavonoid-based polymer and hexamine as a hardener.

### Manufacture of MDF boards

The Composite Panel Association defines medium density fibreboard (MDF) as a dry-formed panel product manufactured from lignocellulosic fibres combined with a synthetic resin or other suitable binder. The panels are compressed to a density of from 496 to 801 kilograms per cubic meter (kg/m³) in a hot press. The entire interfibre bond is formed by a synthetic resin or other suitable organic binder.

The general steps used to produce MDF include mechanical pulping of wood chips to fibres (refining), drying, blending fibres with adhesive resin, catalyst and sometimes wax, forming the resinated material into a mat, and hot pressing typically at a temperature of 180 to 250°C.

### Manufacture of Particleboards

Particleboard is defined as a panel product manufactured from lignocellulosic materials, primarily in the form of discrete particles, combined with a synthetic resin or other suitable binder and bonded together under heat and pressure.

Particleboard is typically produced in densities ranging from about 590 kg/m³ to greater than 800 kg/m³. Although some single-layer particleboard is produced, particleboard generally is manufactured in three layers. The outer layers are referred to as the surface or face layers, and the inner layers are termed the core layers. Face material generally is finer than core material. By altering the relative properties of the face and core layers, the bending strength and stiffness of the board can be increased.

The general steps used to produce particleboard include raw material procurement or generation, classifying by size, drying, blending with adhesive resin, catalyst and wax, forming the resinated material into a mat, hot pressing typically at a temperature of 180°C to 250°C, and finishing.

For both MDF and Particleboard manufacture, catalysts are used to accelerate the resin cure and to reduce the press time. Formaldehyde scavengers also may be added in the blending step to reduce formaldehyde emissions from the process.

### Manufacture of fibreglass insulations and rock wool insulations

The manufacture of fibreglass and rock wool insulation products generally comprise a step of manufacture of the rock wool and fibreglass themselves, which can be performed by different procedures, for example according to the techniques known in the state of the art as rotary process (internal centrifuge), cascade process (external centrifuge), and flame attenuation process (pot & marble).

To ensure the assembly and adhesion of the fibres, an adhesive resin, generally a thermosetting resin, is projected onto the fibres (glass fibre or rock wool), or mixed with the fibres. The mixture of fibres and resin is subjected to a thermal treatment, at a temperature generally higher than 100 °C, in order to effect the polycondensation of the resin and thus obtain a thermal and/or acoustic insulation product. Commonly used adhesive compositions comprise resins derived from formaldehyde, similar to those used in the manufacture of wood derived boards or wood composite boards. During the manufacture further additives may be added to the mixture of fibres and adhesive, such as for example catalysts for crosslinking the resin or waterproofing emulsions (typically paraffin-based). That is, the manufacture of fiberglass insulations and rock wool insulations has many similarities to the manufacture of wood derived boards or wood composite boards.

When manufacturing wood-based composites such as MDF or particleboard, bioadhesives may provide excellent long-term bond durability, and higher fibre/chips moisture tolerance during the hot-press than formaldehyde-based resins. Nevertheless, the addition of a hydrophobic agent such as a paraffin emulsion is needed in order to impart water resistance. However, there is still a need to improve said water resistance and, in particular, increase stability of the finished product under wet conditions.

Besides that, hydrophobic agents currently used, typically paraffin-based emulsions, cannot be incorporated into adhesive compositions to be stored until use, because they are not compatible with the other components of the formulation, in particular, if added in large quantities. As a result of this lack of compatibility, adhesive compositions comprising conventional wax emulsions cannot be stored, because different phases separate a few hours after being manufactured, thus reducing the effectiveness of the hydrophobic agent. Thus, it would be advantageous to improve the compatibility between components present in said composition, so that it can be stored until use.

### DESCRIPTION OF THE INVENTION

The inventors surprisingly found that the adhesive composition described in this document is able to formulate adhesive mixtures achieving a durable adhesion and an improved hydrophobicity, when used in the manufacture of wood composite boards, fibreglass insulations or rock wool insulations, or woven or non-woven fibre mats for compression molding and the resulting composites.

Besides that, in those embodiments of the invention wherein the hydrophobic agent is an environmentally friendly vegetable oil as described in this document, the ingredients present in the adhesive composition are completely compatible and stable over time.

The current invention provides some important advantages in the manufacturing of wood composite boards such as fibreboards, particleboards, chipboards, plywood, paperboards or oriented strand board; or of fibreglass insulations or rock wool insulations; or of woven or non-woven fibre mats for compression molding and the resulting composites, since bond strength and water resistance, in particular, stability of the finished product under wet conditions, is improved.

In some preferred embodiments, the hydrophobic agent is a vegetable oil as described in this document. Since the adhesive active ingredients and the hydrophobic agent are present in the same homogeneous adhesive composition, they can be homogeneously applied on the surface of the wood fibre, fibreglass or rock wool, or the woven or non-woven fibre mats. Additionally, the vegetable oil(s) used as hydrophobic agent in preferred embodiments of this invention does not jeopardize the gluing efficiency of the natural environmentally friendly adhesive substances (i.e., the adhesive active ingredients) comprised in the composition, contrary to typical paraffin emulsions, which can negatively affect perpendicular traction because the adhesiveness to the fibre can be reduced when paraffin is used above a certain amount. According to these preferred embodiments, the current invention also allows a simplified and more economic manufacturing process of wood composite boards, as well as fibreglass insulations or rock wool insulations, or woven or non-woven fibre mats. More specifically, the use of the adhesive composition and system described in this document avoids the need for additional infrastructures such as a storage tank and specific circuits usually required in conventional processes for carrying out a separate application of the hydrophobic agent, as well as it avoids the need for additional infrastructures such as a storage tank, mixers and specific circuits, and the manpower required for mixing the adhesive and the hydrophobic agent on site right before use.

Adhesive mixtures according to the invention provide a more efficient gluing with a long-lasting bonding with wood fibres or chips, fibreglass or rock wool, or woven or non-woven fibre mats wherein the humectant agent and the hydrophobic agent, preferably vegetable oil(s) as described herein, present in such mixtures complement the action of the bio-based adhesives by protecting said mats from water and helping to meet the swelling test after immersing the wood composite board specimen 24 h in water at 20°C. Besides that, in those embodiments of the invention wherein the hydrophobic agent is a vegetable oil as described herein, the compatibility of both active agents in a single homogeneous adhesive composition provides the above-mentioned advantages over prior art.

In the manufacturing of fibreglass insulations or rock wool insulations, the hydrophobic agent present in the adhesive composition of the invention may also help to reduce dust generated during the manufacturing process, so reducing the amount of anti-dust agent needed.

In a first aspect, the present invention is related to an adhesive composition comprising:
- at least one bio-based adhesive, wherein said bio-based adhesive is a polyflavonoid-based polymer,
- at least one surfactant selected from anionic and non-ionic surfactants,
- at least one hydrophobic agent,
- at least one humectant agent comprising at least three hydroxyl groups; and
- water.

As previously mentioned, adhesive compositions described in this document provide an important advantage over prior adhesive compositions used in the manufacture of wood composite boards such as fibreboards, particleboards, chipboards, plywood, paperboards or oriented strand board; or of fibreglass insulations or rock wool insulations, or of woven or non-woven fibre mats for compression molding, because water resistance, in particular, stability of the finished product under wet conditions, can be improved.

Besides that, those preferred embodiments of the adhesive compositions described in this document wherein the hydrophobic agent is a vegetable oil as described herein provide a further important advantage over prior adhesive compositions, because all ingredients required, but the hardener agent, can be included in the same formulation, which remains stable over time. More specifically, the shelf life of the adhesive composition of those embodiments of the invention is at least 2 weeks. In some more particular embodiments, the shelf life of the adhesive composition is at least 30 days, more preferably at least 50 days and even more preferable at least 70 days.

"Shelf life" in the frame of the present invention is meant to be the period of time during which the adhesive composition of the invention can be stored and remain suitable for use. Preferably, this term refers to the period of time during which no separation of phases is observed in the adhesive composition being storage at a temperature from 15°C to 30°C, preferably from 20°C to 25°C. The shelf life can be defined as the period of time that the adhesive composition according to the invention can be stored at a temperature from 15°C to 30°C, preferably from 20°C to 25°C, until its viscosity increases more than 50 % of the initial viscosity, measured at 25°C and shear rate of 100 s⁻¹ in a Peltier-plate Rheometer DHR-2 of TA Instruments. For instance, the shelf life of a fresh adhesive composition according to the invention having an initial viscosity of 300 cP would be the period of time it can be stored at the above-mentioned temperature until achieving a viscosity higher than 450 cP.

Viscosity ranges and values specified in this document are expressed in cP, a well-known viscosity unit commonly used in the technical field of the invention. These viscosity ranges and values can be unambiguously converted to the corresponding ranges and values according to SI Units (Pa s), since that 1 cP is equal to 10⁻³ Pa s. For instance, the adhesive composition of the invention preferably has a viscosity from 10 cP to 3000 cP, i.e., from 0.01 Pa s to 3.0 Pa s.

The adhesive composition of the current invention may optionally include other ingredients such as biocides, defoamers and/or bases.

In the frame of this invention, the terms "bio-based adhesive" or "bio-adhesive" are used interchangeably and both refer to a substance that, interposed between two different materials, is capable of holding those materials together and, additionally, this adhesive substance or active ingredient can be obtained from renewable resources. In particular, the "bio-based adhesive" or "bio-adhesive" according to the invention is a substance such as a resin, in particular a formaldehyde-free resin, capable of hardening by auto-condensation and/or by using a hardener or catalyst. These bio-adhesive substances or active ingredients may be obtained from renewable feedstock widely distributed in nature, vegetable biomass primarily.

The at least one bio-based adhesive comprised in the adhesive composition of the invention is a polyflavonoid-based polymer (i.e., polymers which main polyphenolic patterns are formed by flavonoid monomers)

In particular, polyflavonoid-based polymers according to the invention are free from formaldehyde or monomers derived from formaldehyde and, therefore, they are free from phenol formaldehyde resins.

The bio-adhesive may be obtained from vegetable biomass, thus, in preferred embodiments of the invention, the bio-adhesive substances present in the adhesive composition may be comprised in a vegetable extract.

According to the invention described herein, the adhesive composition preferably comprises a vegetable extract comprising polymers with a polyphenolic pattern mainly formed by flavonoids units with different condensation degree (flavan-3-ol and flavan-2,4-diol) as well as other flavonoids analogs. [Roux DG, Ferreira D, Botha JJ. Forest. Products. Journal 26, 27 (1980*);* Roux DG, Ferreira D, Botha JJ. Journal of Agricultural and Food Chemistry 28, 216 (1980*);* Roux DG, Ferreira D, Hundt HKL, Malan E. Applied Polymer Symposium 28, 335 (1975*)*]. These bio-adhesive substances are known in the art as condensed tannins, as well as polyflavonoids or proanthocyanins polymers.

The vegetable extract comprising polyflavonoids polymers as bio-based adhesives is preferably selected from mimosa bark extract, quebracho wood extract, hemlock bark extract, sumach bark extract, pine bark extract, pecan nut pith extract, Douglas fir bark extract and a combination thereof. More preferably, the vegetable extract comprised in the adhesive composition of the invention is selected from mimosa bark extract, pecan nut pith extract, pine bark extract and a mixture thereof.

Pecan nut pith extracts are more reactive than other vegetable extracts such as mimosa bark or pine bark extracts due to its high content of flavonoids units comprising both phloroglucinol A rings and pyrogallol B rings. For this reason, despite its limited availability in particular in Spain, adhesive compositions according to some embodiments of this invention comprise at least one pecan nut pith extract.

According to other embodiments of the invention, however, the adhesive composition preferably comprises mimosa or pine extracts, because they provide a suitable adhesive reactivity and, additionally, they can be available in sufficient quantity for industrial manufacturing of wood composite boards, fibreglass insulations or rock wool insulations, or woven or non-woven fibre mats for compression molding and the resulting composites at a reasonable price. In particular, mimosa bark extracts are commercially available even in high volume.

Adhesive compositions according to particular embodiments of the invention comprise at least one vegetable extract comprising polyflavonoids preferably having a Stiasny number higher than 65%, more preferably equal to or higher than 75%.

The Stiasny number method is commonly used to determine the polyphenol content of the extracts according to the procedure proposed by Yazaki and Hillis (see Yazaki, Y., Hillis, W.E., 1980. Molecular size distribution of radiata pine bark extracts and its effects on properties. Holzforschung 34, 125-130). According to this method, an exact amount of the dried extract (approx. 0.250 g) is dissolved in distilled water (25ml), then 2.5ml of 10M HCL and 3.2ml of 55 wt.% formaldehyde water solution are added. The mixture is heated under reflux for 30min. After that, the suspension is filtered under vacuum using a 0.1µm type VVLP filter (Durapore Membrane filters), the precipitate is washed with warm water, and then dried at 105°C until constant weight. The Stiasny number is the ratio of the oven-dried weight of the precipitate to the initial dried extract weight, expressed as a percentage.

In some embodiments of the invention, at least one of the vegetable extracts comprised in the adhesive composition is a mimosa bark extract, preferably having Stiasny number higher than 65%, and more preferably a viscosity which ranges from 100 cP to 1000 cP (measured in a 50% w/w water solution at 25°C and shear rate of 100 s-1 in a Peltier-plate Rheometer), a pH (50% w/w water solution at 25°C) from 5 to 7.5 and/or a reactivity/gel time (50% w/w water solution with 6.5% w/w Hexamine Powder at 100°C) from 100 to 200 s. In particular, the mimosa bark extracts present in the adhesive composition of the invention may be a commercial product.

In some embodiments of the invention, at least one of the vegetable extracts comprised in the adhesive composition is a pine bark extract, preferably having Stiasny number equal to or higher than 75%, and more preferably equal to or higher than 80%. Besides that, this pine bark extract has a viscosity which preferably ranges from 100 cP to 1000 cP (measured in a 36% w/w water solution at 25°C and shear rate of 100 s-1 in a Peltier-plate Rheometer), a pH (36% w/w water solution at 25°C) from 6 to 8, a reactivity/gel time (36 % w/w water solution with 6.5wt.% Hexamine Powder at 100°C) from 50 to 110 s and/or a reactivity/gel time (36 % w/w water solution with pH 7 with 12% w/w tris(hydroxymethyl)nitromethane powder) from 50 to 70 s.

Adhesive compositions according to the invention may comprise a combination of different polyflavonoid vegetable extracts. In particular, they may comprise one or more of the mimosa bark extract and/or the pine bark extract as described in this document.

The surfactant comprised in the adhesive composition according to the invention may be at least one surfactant selected from anionic and non-ionic surfactants. In particular embodiments of the invention, such surfactant is a mixture of at least one non-ionic surfactant and at least one anionic surfactant.

"Non-ionic surfactants" are surfactants that do not bear an electrical charge. Although they do not contain an ionic group as their hydrophilic component, hydrophilic properties are conferred on them by the presence of a number of oxygen atoms in one part of the molecule which are capable of forming hydrogen bonds with molecules of water. For example, many long chain alcohols exhibit some surfactant properties, such as fatty alcohols, cetyl alcohol, stearyl alcohol, and cetostearyl alcohol, and oleyl alcohol. Other non-ionic surfactants are alcohol ethoxylates, polyglycol ethers, polyoxyethylene alkyl ethers, secondary alcohol ethoxylates, polyoxyethylene alkyl ethers, polyalkyl glycol alkyl ethers (e.g. polyethylene and polypropylene glycol alkyl ethers), glucoside alkyl ethers, polyethylene glycol alkylphenyl ethers or glycerol alkyl esters. In some embodiments of the invention, the non-ionic surfactant is selected from secondary alcohol ethoxylate and ethoxylated fatty alcohol.

"Anionic surfactants" are surfactants that contain anionic functional groups at their head, such as sulfate, sulfonate, phosphate, and carboxylates. Prominent alkyl sulfates include ammonium lauryl sulfate, sodium lauryl sulfate (sodium dodecyl sulfate, SLS, or SDS), and the related alkyl-ether sulfates sodium laureth sulfate (sodium lauryl ether sulfate or SLES), and sodium myreth sulfate. Also docusate (dioctyl sodium sulfosuccinate), perfluorooctanesulfonate (PFOS), perfluorobutanesulfonate, alkyl-aryl ether phosphates and alkyl ether phosphates are anionic surfactants. Suitable alkyl carboxylates include C12-C22 alkyl carboxylates, such as carboxylates of lauric acid (C12), myristic acid (C14), palmitic acid (C16), stearic acid (C18), oleic acid (C18:1), C20+C22 fatty acids, or a combination thereof. In the adhesive composition according to the invention, preferably at least about 50 wt.% of the fatty acids in the total amount of the anionic surfactant are fatty acids having from 20 to 22 carbon atoms. In the case not sufficient fatty acids of said length are contained in the anionic surfactant used as raw materials, fatty acids having 20 to 22 carbon atoms may be added to the formulation, until the indicated percentage is reached.

In some embodiments of the invention, the non-ionic surfactants preferably are alcohol ethoxylates, whereas the anionic surfactants preferably are C12-C22 alkyl carboxylates such as the carboxylates of lauric acid (C12), myristic acid (C14), palmitic acid (C16), stearic acid (C18), oleic acid (C18:1), or C20+C22 fatty acids. Preferably, the anionic surfactant is a mixture of diethyl ammonium carboxylate of palmitic acid, stearic acid and C20-C22 fatty acids.

Preferably, the adhesive composition according to the invention may comprise from 0.002 wt.% to 0.5 wt.% of at least one surfactant selected from anionic and non-ionic surfactants, more preferably of a mixture of an anionic and non-ionic surfactant as described herein.

In the adhesive composition of the invention, the surfactants may either be added or obtained in situ by a saponification reaction. The weight percentages indicated refer to the final concentration of surfactants within the adhesive composition, independently of whether they were added as such or generated in situ for example by reaction of fatty acids with a base.

Typical bases which can be added to the adhesive composition of the invention to generate the surfactant in situ are those which may be used in a saponification. Such bases may include, but are not limited to alkali metal hydroxides such as sodium or potassium hydroxide, preferably sodium hydroxide, or other alkaline compounds such as alkali metal carbonates, alkaline earth hydroxides, ammonia, or organic amines such as an ethanolamine. In particular, the base may be selected from ammonia and an ethanolamine such as monoethanolamine, diethanolamine, triethanolamine or a combination. Preferably, the ethanolamine is diethanolamine.

The amount of base comprised in the adhesive composition of the invention may depend on the amount of surfactant and the base used. In those particular embodiments, wherein the adhesive composition comprises from 0.002 wt.% to 0.5 wt.% of at least one surfactant selected from anionic and non-ionic surfactants, more preferably of a mixture of an anionic and non-ionic surfactant as described in this document, and the base is an ethanolamine, preferably diethanolamine, the amount of base may range from 0.0010 wt.% to 0.3 wt.% in respect of the total weight of the adhesive composition.

The adhesive composition of the invention comprises at least one hydrophobic agent. In the frame of this invention, it should be understood that "hydrophobic agent" refers to a compound or product (i.e., a combination of different compounds) lacking affinity for water, and tending to repel or not to absorb water. Typically, hydrophobic agents are or comprises non-polar molecules.

In particular embodiments, the hydrophobic agent may be selected from:
- paraffin;
- at least one vegetable oil, preferably selected from hydrogenated or partially hydrogenated palm oil, soy oil and a combination thereof; and
- a combination of paraffin and vegetable oil.

In particular embodiments, the hydrophobic agent may be a wax emulsion, preferably a paraffin-based emulsion. Said paraffin-based emulsion may comprise 41-57 wt.% paraffin, 40-55 wt.% water and other additives such as anionic and/or non-ionic surfactants. As previously mentioned in this document, paraffin-based emulsions are commonly used as hydrophobic agent in adhesive composition intended to be used in manufacturing wood composite boards. Thus, they are commercially available, for examples, as SELAR 1367 or SELAR 1728 (FORESA Technologies S.L.U.).

In those embodiments of the invention wherein paraffin is used as hydrophobic agent, both the adhesive composition and the adhesive mixture as described in this document should be prepared just before use to avoid phase separation which could reduce the effectiveness of the hydrophobic agent.

"Hydrogenated or partially hydrogenated palm oil" in the frame of the present invention is intended to encompass any level or extent of hydrogenation, so that the term only excludes non-hydrogenated oil, i.e., natural oil that has not been submitted to any kind of hydrogenation.

The iodine value of the total amount of vegetable oils in the adhesive composition is preferably above 10 g of iodine per 100 g of the total amount of oils, since the compositions therewith obtained are kinetically much more stable than if the iodine value is below 10.

In more particular embodiments, the soy oil in the formulation is non-hydrogenated soy oil, having an iodine value ranging from 120 to 155 gr iodine per 100 gr of soy oil.

The adhesive composition described herein may comprise of 0.5 wt.% to 8 wt.% of at least one hydrophobic agent, in particular paraffin, vegetable oil(s) as described herein or combinations thereof. In preferred embodiments, the amount of hydrophobic agent may range from 1 wt.% to 5 wt.%, more preferably from 1 wt.% to 3 wt.%, amounts expressed by weight in respect to the total weight of the adhesive composition.

In particular embodiments, the adhesive composition described herein may comprise from 0.5 wt. % to 7.4 wt.% of hydrogenated or partially hydrogenated palm oil, and from 0.05 wt. % to 0.8 wt.% of soy oil, in particular, non-hydrogenated soy oil.

Besides providing an adhesive composition stable over time, in particular an adhesive composition having a shelf life of at least 2 weeks. Preferably of at least 30 days, more preferably at least 50 days and even more preferable at least 70 days, vegetable oils described herein can also contribute to reduce the viscosity of the adhesive composition to desired values as described in this document.

The adhesive composition of the invention comprises at least one humectant agent, wherein said humectant agent is a compound comprising at least three hydroxyl groups.

"Humectant agent" in the frame of the present invention is meant to be any substance suitable for retaining or preserving moisture, in particular when the adhesive mixture according to the invention is used in the manufacture of wood composite boards, preferably fibreboards, particleboards, chipboards, plywood, paperboards or oriented strand board; or fibreglass insulations or rock wool insulations, or woven or non-woven fibre mats for compressing molding and the resulting composites. Thus, the presence of said humectant agent provides an adhesive mixture having an improved open time (i.e., the period of time from blending fibre/chips/wood with the adhesive mixture to hot pressing of the resinated material), which results in an important advantage in the manufacturing process of wood composite boards, preferably fibreboards, particleboards, chipboards, plywood, paperboards or oriented strand board; or fibreglass insulations or rock wool insulations, or woven or non-woven fibre mats for compressing molding and the resulting composites, specially at industrial scale.

According to the present invention, the humectant agent is a compound comprising at least three hydroxyl groups, preferably from 3 to 6 hydroxyl groups. These compounds provide a great advantage to the adhesive composition of the invention because they can also help to solubilize and homogenize the polyflavonoid-based polymer into the adhesive composition, system and mixture of the invention, in particular in those embodiments having a high polyflavonoid-based polymer content (i.e., higher than 55 wt.%, expressed as the solid content of polyflavonoid-based polymer extract with respect to the sum of said extract and water).

Additionally, adhesive composition, system and mixture of the invention having said humectant agent may comprise a higher solid content (in particular equal to or higher than 60 wt.%, expressed as the solid content of the adhesive composition with respect to the total weight of said composition) which represents another important advantage, in particular in particleboard and plywood manufacture.

Inventors also found that the presence of humectant agent(s) as described herein in the adhesive composition, system and mixture of the invention contributes to reduce surface tension, thus improving wetting ability of the adhesive mixtures obtained from those adhesive compositions. Thus, adhesive mixtures according to the invention wet better a substrate such as wood fibre, fibreglass or rock wool, or the woven or non-woven fibre mats and, therefore, it provides a better penetration of the adhesive to said substrate, which in turn contributes to improve water resistance. As a consequence, the products obtained using the adhesive composition, adhesive system or adhesive mixture of the invention are able to comply with the high-demanding established requirements for use them in wet conditions.

In particular embodiments, the humectant agent preferably has a boiling point higher than 120 °C, more preferably higher than 140 °C, and even more preferably of 150°C to 310°C. Said humectant may have of 3 to 6 hydroxyl groups, in particular, it may have of 3 to 5 hydroxyl groups. As previously mentioned, the manufacture of wood composite boards, preferably fibreboards, particleboards, chipboards, plywood, paperboards or oriented strand board; or fibreglass insulations or rock wool insulations; or woven or non-woven fibre mats for compressing molding and the resulting composites typically requires a thermal treatment at a temperature generally higher than 100°C. In particular, manufacturing of wood composite boards such as fibreboards or particleboards comprises hot pressing, typically at a temperature higher than 180°C, in particular of about 180°C to about 250°C. The inventors found that humectant agents according to these embodiments are able to improve fluidity of the adhesive mixture during the hot pressing, which contributes to improve bond strength and, even more importantly, water resistance of the products manufactured with said adhesive mixture.

The humectant agent according to the invention may be compound comprising a hydrocarbon chain comprising at least 3, preferably of 3 to 6, more preferably of 3 to 5, hydroxyl groups. In preferred embodiments, said humectant agent may be one or more polyols of general formula CₙH₂ₙ₊₂Oₙ, wherein n is an integer equal to or higher than 3, preferably of 3 to 6, more preferably of 3 to 5. Suitable polyols that may be used as humectant agent in the present invention are glycerol, erythritol, xylitol, sorbitol, mannitol, 2-Ethyl-2-hydroxymethyl-1,3-propanediol, 2-(Hydroxymethyl)-2-methylpropane-1,3-diol, 2-Hydroxymethyl-1,3-propanediol. Preferably, the humectant agent is glycerol.

In some embodiments of the invention, in particular when the amount of vegetable extract comprising polyflavonoids is equal to or higher than 65 wt. % (expressed as weight of the solid content of said polyflavonoid extract with respect to the weight of said extract and water), the humectant agent as described herein can help to reduce the viscosity of the composition.

The adhesive compositions described in this document may comprise further additives such as colorants, biocides, antifoaming agents or a combination thereof. One or more of these additives may be added to the adhesive composition of the invention just before its use or they may be added previously, for example during the manufacturing of the adhesive composition, preferably none of these further additives negatively affect the stability of the adhesive composition of the invention during storage.

The adhesive composition according to the invention preferably comprises:
- 28 wt.% to 55 wt.% of at least one vegetable extract comprising polyflavonoids;
- 0.002 wt.% to 0.5 wt. % of at least one surfactant selected from anionic and non-ionic surfactants, the surfactant being added as such or obtained in situ by addition of a base, preferably between 0.001 wt.% to 0.3 wt.% of ethanolamine;
- 0.5 wt.% to 8.0 wt.% of at least one hydrophobic agent, preferably of 1 wt.% to 5 wt.%, more preferably of 1 wt.% to 3 wt.%;
- 0.5 wt. to 20 wt.% of at least one humectant agent comprising at least three hydroxyl groups; and
- 25 wt.% to 65 wt.% of water;
wherein all amounts are expressed by weight in respect to the total weight of the adhesive composition, and the sum of these amounts is equal to or lower than 100 %.

In particular embodiments, the adhesive composition comprises a hydrophobic agent which is a mixture of hydrogenated or particularly hydrogenated palm oil and soy oil. In those embodiments, the adhesive composition may comprise:
- 0.5 wt. % to 7.4 wt.% of hydrogenated or partially hydrogenated palm oil,
- 0.05 wt. % to 0.8 wt.% of soy oil,
wherein these amounts are expressed by weight in respect to the total weight of the adhesive composition.

Adhesive composition according to these embodiments are completely stable over time and, therefore, their shelf life is of at least 2 weeks. In some particular embodiments of the current invention, the shelf life of the adhesive composition is at least 30 days, more preferably at least 50 days and even more preferably at least 70 days.

Consequently, the adhesive composition of the invention allows to work in a broad range process conditions, in particular, in MDF and particleboard manufacturing, since the positive effects of ingredients present in the adhesive composition (i.e., adhesive resin, hydrophobic agent, surfactant and humectant agent) are optimized.

In particular embodiments of the invention, the viscosity of the adhesive composition described herein is preferably from 10 cP to 3000 cP, more preferably from 20 cP to 1500 cP, measured using a Rheometer DHR-2 (TA Instruments), with a geometry Peltier-plate, so that the apparent viscosity is measured when the stationary regime is achieved in a flow test at 25°C and shear rate of 100 s-1.

In more particular embodiments, the viscosity of the adhesive composition is preferably from 10 cP to 1000 cP, more preferably from 20 cP to 600 cP, and even more preferably from 20 cP to 400 cP, measured using a Rheometer DHR-2 (TA Instruments), with a geometry Peltier-plate, so that the apparent viscosity is measured when the stationary regime is achieved in a flow test at 25°C and shear rate 100 s-1. This is particularly suitable for manufacturing MDF boards, preferably using a blowline system.

In this manufacturing process, wood fibres are first blended with an adhesive mixture of components A (adhesive composition) and B (hardener agent) according to the invention and, after that, dried until a humidity from 8 wt.% to 20 wt.% (based on oven-dried glued fibre). Therefore, the total solid content of the adhesive composition used in this process can be lower than, for example, adhesive compositions intended to be used in particleboard manufacturing, thus avoiding or minimizing problems associated with viscosity, and improving the stability of the adhesive composition.

The concentration of the solid content of the vegetable extract comprising polyflavonoids is related to the viscosity of the adhesive composition. The lower the viscosity, the easier the pumping of the adhesive composition through the gluing circuit, and additionally, the smaller the size of the drop sprayed on the fibre in the blow-line and, therefore, a more effective gluing is achieved. According to some embodiments of the invention, the humectant agent comprising at least three hydroxyl groups as described herein and, preferably vegetable oils used as hydrophobic agent, may help to reduce the viscosity of the adhesive composition, system and mixture, so that the solid content of said compositions, systems and/or mixtures can be increased without the above-mentioned problems due to a high viscosity.

In other more particular embodiments, the viscosity of the adhesive composition is preferably from 10 cP to 3000 cP, more preferably from 20 cP to 1500 cP, and even more preferably from 50 cP to 600 cP, measured using a Rheometer DHR-2 (TA Instruments), with a geometry Peltier-plate, so that the apparent viscosity is measured when the stationary regime is achieved in a flow test at 25°C and shear rate of 100 s-1. This is particularly suitable for manufacturing particleboards.

Typically, the viscosity of aqueous solutions having a solid content of pine bark extract higher than 45 wt.% is so high that this solution is difficult to handle. Due to the higher reactivity of polyflavonoid-based adhesive active ingredients comprised in pine bark extracts, however, the amount of solid content of pine bark extract specified herein is able to achieve a suitable adhesive effect, in particular when the Stiasny number of the pine bark extract is equal to or higher than 75%.

Different to MDF manufacturing in the blowline, the adhesive mixture to be used in particleboards manufacturing must have the highest possible solids content, while maintaining a viscosity which enables it to be pumped through the gluing circuit and uniformly sprayed on the particles. In the manufacturing of particleboards, glued wood chips are not dried before being press and, therefore, an excess of humidity from the adhesive mixture cannot be corrected. If the humidity of the glued wood chips is excessive, once such glued wood chips are pressed at wording temperatures, typically from 180°C to 250°C, a lot of vapour pressure is generated which can cause the board to burst. Typically, the way to avoid or at least minimize bursting due to excessive glued fibre moisture is to reduce the manufacturing line speed and/or press temperatures to enable more gradual water steam output and/or to reduce the vapour pressure generated, but this leads to a reduction in productivity. Advantageously, the use of the adhesive composition of the invention makes it possible to work with a higher glue particle moisture (in particular, this moisture may range from 8 wt.% to 20 wt.%), especially when using pine bark extracts or pecan nut pith extracts, without the need to reduce the speed of the manufacturing line to avoid problems due to an excess of water vapor in the hot-press. As a result of this higher moisture of glued particles, several properties of the particleboards (MDF as well) such as thickness swelling and internal bond after a V-100 cycle or V-313 cycle can be improved.

The adhesive composition according to the invention may be manufactured sequentially and gradually adding each of the ingredients comprised in the adhesive composition to water, under stirring or equivalent means of mixing so that homogenization of the ingredient added is achieved before starting the addition of the next.

The adhesive composition may be manufactured by gradually and sequentially adding surfactants and hydrophobic agent(s) to water, while maintaining the mixture under stirring or equivalent means of mixing and the temperature between about 60 and about 100°C. Optionally, further additives such as bases, defoamers or biocides may also be added to the mixture. Subsequently the heated mixture obtained may be cooled until reaching room temperature (i.e., a temperature of 20-25°C). A further amount of water may be added, if required, and the humectant agent and the polyflavonoid-based polymer may be gradually and separately added to the mixture under stirring or equivalent means of mixing, thus obtaining the adhesive composition according to the invention. In particular embodiments, the polyflavonoid-based polymer used may be a vegetable extract in solid form or aqueous solution. In preferred embodiments, the polyflavonoid-based polymer is gradually added to the mixture while stirring at a temperature higher than 20°C, preferably of 25°C to 100°C, to promote dissolution; and, after that, the mixture is maintained in agitation at a temperature of 20 °C to 100°C for at least 15 min and up to 2 hours.

Adhesive compositions as described in this document manufactured by the process above described, in particular, those wherein the final mixture is maintained in agitation at a temperature of 20°C to 100°C for at least 15 min and up to 2 hours, provide an improved solubility of the polyflavonoid-based polymer in the adhesive composition and, as a result, they are able to provide a final product (in particular a wood composite board as described in this document) with an improved performance, in particular the internal bond (dry and after the V-100 cycle) and thickness swelling. More specifically, as a result of the improved solubility of the polyflavonoid-based polymers in the adhesive composition, and also in the adhesive mixture used in the manufacture of wood composite boards, preferably fibreboards, particleboards, chipboards, plywood, paperboards or oriented strand board; or fibreglass insulations or rock wool insulations, or woven or non-woven fibre mats for compressing molding and the resulting composites, polyflavonoid-based polymers (i.e., the bio-base adhesive compound) may have a great mobility during the hot pressing of the final product, thus improving the fluidity of the adhesive mixture As a consequence, the number of bonds that this adhesive make can be significantly increased, thus providing a final product with an increased bond strength.

The aqueous solution of vegetable extract comprising polyflavonoid polymers may be commercially available or prepared in house from a solid vegetable extract or, alternatively, from an aqueous solution of vegetable extract with a different solid content.

A further object of the present invention refers to an adhesive system comprising, isolated one of another:
- Component A: the adhesive composition as defined in this document, in particular wherein the hydrophobic agent is a vegetable oil as described herein, and
- Component B: at least one hardener agent, preferably the at least one hardener agent is comprised in a hardening composition further comprising water.

Therefore, the adhesive system of the invention can provide a more effective and long-lasting gluing, in particular, in the manufacture of wood composite boards such as MDF or particleboard, because both the adhesive and hydrophobic agents are comprised in a single monocomponent formulation (component A).

"Hardener agent" or "catalyst" in the frame of the present invention is meant to be any substance suitable to be used to cure bio-based adhesive and, in particular, those bio-based adhesives described in this document. In those particular embodiments of the invention wherein the bio-based adhesives are polyphenolic polymers and, in particular, polyflavonoids, the hardener agent may be selected from the group comprising hexamine, tris(hydroxymethyl)nitromethane, glyoxal, Lewis acids, 2,5-dihydroxymethylfuran, 2,5-dihydroxymethylfuran moieties, polyethyleneimine (PEI), but is not limited to said catalysts. Preferred Lewis acid may be silica, boric acid or aluminium trichloride. As previously mentioned, the catalyst may be a 2,5-dihydroxymethylfuran moiety, i.e., a compound comprising 2,5-dihydroxymethylfuran as part of a bigger structure such as, for example, 2,5-dihydroxymethylfuran carbohydrate oligomers. Said catalysts are needed to cure adhesive polyflavonoid resins, which can be used in the manufacture of all kinds of wood derived boards, including fibreboards, particleboards, chipboards, oriented strand boards, and fibreglass insulations or rock wool insulations.

"Wood composite boards" in the frame of the present invention refers to boards obtained by binding and compressing natural a lignocellulosic wood material, optionally in combination with synthetic materials, Examples thereof, but not limited to, are particleboard, fibreboard (MDF and HDF), chip boards, oriented strand boards and plywood.

Preferably, the hardener agent is hexamine, since this compound in combination with the polyflavonoids-based adhesive composition described in this document is able to provide MDF boards that at least comply with the requirements for structural board for use in dry conditions (MDF.LA) according to UNE-EN 622-5: 2010 and preferably also comply with the requirements for structural board for use in humid conditions (MDF.HLS) according to UNE-EN-622.5: 2010. Additionally, hexamine can be considered as a commodity. Consequently, adhesive systems according to the invention comprising hexamine as hardener agent show an optimised balance between effectiveness and cost, which render them particularly suitable for the industrial manufacture of MDF boards.

Other preferred hardener agents which also provide good results in bonding quality are tris(hydroxymethyl)nitromethane, polyethyleneimine (PEI) or combinations thereof, as well as combinations of one or more of these catalysts with hexamine.

Thus, in some particular embodiments of the invention, the hardener agent may be tris(hydroxymethyl)nitromethane, since this compound in combination with the polyflavonoid-based adhesive composition described in this document is able to provide MDF boards that at least comply with the requirements for structural board for use in dry conditions (MDF.LA) according to UNE-EN 622-5: 2010, and preferably also comply with the requirements for structural board for use in humid conditions (MDF.HLS) according to UNE-EN-622.5: 2010. As previously mentioned, this hardener agent may be combined with hexamine to obtain the required bonding quality, while reducing the cost.

Some hardener agents (component B) such as polyethyleneimine, tris(hydroxymethyl)nitromethane or silica, can be directly mixed with the adhesive composition according to the current invention to obtain the adhesive mixture to be applied on the wood chips or particles. In some alternative embodiments, component B is a hardening composition comprising the at least one hardener agent and water. For example, component B may be commercially available water solutions comprising at least one hardener agent such as a 40 wt.% glyoxal water solution or a 50 wt.% tris(hydroxymethyl)nitromethane water solution.

In some particular embodiments, the adhesive system according to the present invention may comprise, isolated one of another:
- Component A: the adhesive composition as described herein comprising at least one vegetable extract comprising polyflavonoids polymers, preferably wherein the hydrophobic agent is a vegetable oil, as described herein, and
- Component B: the hardening composition comprising: 2 to 12 parts by weight of hexamine, wherein the hexamine is comprised in an aqueous solution with a concentration between 30 wt.% and 42 wt.%; and
the amount of hexamine is expressed with respect to 100 parts by weight of solid content of the vegetable extract present in the adhesive composition (component A).

The hardening composition as described in this document can be obtained gradually adding a hardener agent, preferably hexamine, to water at a temperature from 15°C to 25°C, maintaining an agitation speed preferably higher than 150rpm by using a high shear dispenser until reaching dissolution.

The instant invention also refers to an adhesive mixture comprising component A and component B as described in this document.

As previously mentioned, adhesive compositions comprising paraffin as hydrophobic agent are not stable during storage, since phase separation can appear some hours after preparation. Thus, according to some particular embodiments of the invention, both the adhesive composition and adhesive mixture comprising said hydrophobic agent are preferably freshly prepared before the manufacturing of wood composite boards, preferably fibreboards, particleboards, chipboards, plywood, paperboards or oriented strand board; or fibreglass insulations or rock wool insulations, or woven or non-woven fibre mats for compressing molding and the resulting composites. In this way, such phase separation, which may negatively affect the effectiveness of the hydrophobic agent, can be prevented.

Further object of the present invention is the use of the adhesive composition, the adhesive system or the adhesive mixture disclosed in this document for manufacturing wood composite boards, preferably fibreboards, particleboards, chipboards, plywood, paperboards or oriented strand board; or fibreglass insulations or rock wool insulations; or woven or non-woven fibre mats for compressing molding and the resulting composites.

All the adhesive composition, the adhesive system and the adhesive mixture of the invention may be used to increase the hydrophobicity of hydrophilic materials. They may be used, for example, in the manufacture of wood derived boards, fibreboards, particleboards, chipboards, oriented strand boards, fibreglass or rock wool insulations, or combinations thereof. Besides that, the adhesive system and the adhesive mixture of the invention may be used in the manufacture of woven or non-woven fibre mats for compressing molding and the resulting composites.

When used in the manufacturing of MDF, components A and B of the adhesive system according to the invention can be mixed in the selected proportions to obtain an adhesive mixture, for example into a static mixer, and such adhesive mixture is applied to wood fibres. Preferably the manufacturing of MDF is carried out in a blow-line system, and the adhesive mixture of components A and B is introduced in the blow-line after preparation.

In particular, when the adhesive composition of the invention is used for MDF manufacturing using the blow-line, the adhesive composition can be applied directly on the blow-line and, optionally, a small amount could be added as lubricant to the refiner's disk in order to maintain energetic savings.

When used in the manufacturing of particleboards, components A and B of the adhesive system according to the invention can be mixed in the selected proportions to obtain an adhesive mixture, for example into a static mixer, and optionally pumped into a second mixer where further additives might be incorporated such as colorants, additional hydrophobic agent, or a combination thereof. Then, the adhesive mixture is injected in the blenders.

The present invention also refers to the wood composite boards comprising lignocellulosic wood materials adhered by the adhesive mixture of the invention, wherein such wood composite boards are preferably fibreboards, particleboards, chipboards, plywood, paperboards or oriented strand board. Besides that, this specification also refers to fibreglass insulations or rock wool insulations comprising, respectively, fibreglass or rock wool particles adhered by the adhesive mixture of components A and B according to the invention. Analogously, this specification also refers to the woven or non-woven fibre mats adhered by the adhesive mixture of components A and B according to the invention, and the composites resulting from compression molding of said mats.

In particular embodiments of this invention, said wood composite boards are MDF boards which at least comply with the requirements for structural board for use in dry conditions (MDF.LA) according to UNE-EN 622-5: 2010; and preferably said MDF boards also comply with the requirements for structural board for use in humid conditions (MDF.HLS) according to UNE-EN-622.5: 2010 (see Table 4 below).

In other particular embodiments of this invention, said wood composite boards are particleboards which at least comply with the requirements for category P1, P2 or P4 according to UNE-EN-312: 2010. In more particular embodiments, said particleboards can also comply with the requirements for category P3, P5, P6 or P7 according to UNE-EN-312: 2010 (see Table 9 below).

The present invention also refers to wood composition boards such as fibreboards, particleboards, chipboards, plywood, paperboards or oriented strand board; as well as fibreglass insulations or rock wool insulations, or woven or non-woven fibre mats and the composites resulting from compression molding of said mats, obtained or obtainable by a manufacturing process wherein the adhesive composition, adhesive system or adhesive mixture according to the invention is used. The process for manufacturing such wood composite boards, fibreglass insulations or rock wool insulations, or woven or non-woven fibre mats and the resulting composites may correspond to a process typically used in the art, with the exception that an adhesive mixture comprising a polyflavonoid-based resin as described herein is applied to the lignocellulosic wood material, the fibreglass or the rock wool particles, or the woven or non-woven fibre mats.

According to particular embodiments of the invention, the wood composite board obtained or obtainable by this manufacturing process is a MFD board which at least complies with the requirements for structural board for use in dry conditions (MDF.LA) according to UNE-EN 622-5: 2010, and preferably, said MDF board also complies with the requirements for structural board for use in humid conditions (MDF.HLS) according to UNE-EN-622.5: 2010 (see Table 4 below). Advantageously, adhesive compositions (component A) comprising mimosa extract, and hexamine as hardener agent (in component B) may provide MDF boards fulfilling requirements for structural board for use in humid conditions (MDF.HLS) according to UNE-EN-622.5: 2010 (see Table 5 below).

According to other particular embodiments of the invention, the wood composite board obtained or obtainable by this manufacturing process is a particleboard which at least complies with the requirements for category P1, P2 or P4 according to UNE-EN-312: 2010 and, preferably, said particleboard can also comply with the requirements for category P3, P5, P6 or P7 according to UNE-EN-312: 2010 (see Table 9 below). Advantageously, adhesive compositions (component A) comprising mimosa extract, and hexamine as hardener agent (in component B) may provide said particleboard fulfilling requirements for category P3, P5, P6 or P7 according to UNE-EN-312: 2010 (see Table 10 below).

### EXAMPLES

In the following, the invention will be further illustrated by means of Examples. The Examples should in no case be interpreted as limiting the scope of the invention, but only as an illustration of the invention.

### EXAMPLE 1. MDF PILOT PLANT PREPARATION USING AN ADHESIVE MIXTURE COMPRISING MIMOSA BARK EXTRACT

Monolayer MDF were prepared in a pilot scale plant using the mimosa polyflavonoid-based adhesive composition of Table 1, and formulation (the adhesive mixture of components A and B) of Table 2. In Table 1, the amount of vegetable oils is the sum of hydrogenate palm wax having an iodine value higher that 10 gr I₂/100 gr and soy oil, and additives is the sum of other compounds present in the adhesive composition of the invention, in particular, the sum of anionic surfactant obtained in situ by reaction of long chain fatty acids and diethanolamine, and non-ionic surfactant (i.e.: secondary alcohol ethoxylated). The adhesive composition of Table 1 was used to obtain the formulation (i.e., adhesive mixture) of Table 2.

The mimosa extract used in this composition was a solid powder with a moisture of 6 wt.%, polyphenolic (flavonoid) content of 68 wt. %, a pH (10% w/w solution) of 7.0, a viscosity (50% w/w solution at 25°C) of 600 cP, reactivity/gel time (50% w/w solution with 10% Chemanol Paraformaldehyde powder at 100°C) 90 s, and reactivity/gel time (50% w/w solution with 8% w/w hexamine powder at 100°C) 150 s.

**Table 1. Adhesive composition of Example 1**

| **ADHESIVE COMPOSITION** | **Parts by weight** |
|---|---|
| | **1** |
| **MIMOSA EXTRACT** | 70.2 |
| **WATER** | 82.8 |
| **GLICEROL** | 25.5 |
| **VEGETABLE OILS** | 2.1 |
| **ADDITIVES** | 0.2 |

**Table 2. Formulation of Example 1 for Pilot Scale MDF**

| | **MDF BOARDS ¹** | **1/2** |
|---|---|---|
| | **FORMULATION** | **1** |
| | | **Parts by weight** |
| **Component A** | **Adhesive Compositions of the Invention** | 361.5 |
| **Component B** | **40% HEXAMINE WATER SOLUTION** | 22.7 |

| | | |
|---|---|---|
| ¹ Two MDF board were prepared per formulation (the needed amount of dry fiber was 1000g). | | |

The preparation of the adhesive mixture corresponding to formulation 1 (Boards 1 / 2) is described below.

### Component A

0.077 g of long chain fatty acid and 0.077 g of diethanolamine were added to 3.09 g of water at a temperature of about 70 °C, and the aqueous mixture was stirred to obtain the ionic surfactant in situ by reaction with fatty acids. Subsequently, 1.98 g of melted hydrogenated palm wax having an iodine value higher that 10 gr I₂/100 gr, 0.22 g of soy oil and 0.055 g of the non-ionic surfactant, in particular a secondary alcohol ethoxylate, were gradually and sequentially added to the mixture while stirring and maintaining the temperature at about 70°C. After that, the heated mixture obtained was slowly cooled until reaching a temperature of 20-25°C. Then, 175.6 g of an aqueous glycerol solution comprising 39.3 wt.% of mimosa extract, previously prepared by dissolving 70.2 g of mimosa extract in solid form into 79.9 g of water and 25.5 g of glycerol, was added to the mixture and it was stirred until homogenization. Finally, the mixture was stirred for 1h to obtain a uniform adhesive composition ready to be stored until use.

Viscosity of this fresh adhesive composition (i.e., initial viscosity) was measured at 25°C and shear rate of 100 s⁻¹ in a Peltier-plate Rheometer DHR-2 of TA Instruments.

### Component B (40 wt.% hexamine solution)

A single preparation was made of 100 g of homogenous 40% hexamine solution, which was mixed with the polyflavonoids-containing adhesive composition according to the amounts of Table 2. For the preparation of this solution, a small disperser with high shear was used to maintain agitation throughout the process at a temperature from 20°C to 25°C. In these conditions, 40 g of hexamine were gradually added to 60 g of water and the mixture was stirred until the hardening composition was obtained.

All compositions prepared (components A and B) were duly identified, packed and storage for 2 weeks at a temperature from 20°C to 25°C before being use in the manufacturing of MDF boards. After that time, the viscosity of the adhesive composition was measured at 25°C and shear rate of 100 s⁻¹ in a Peltier-plate Rheometer DHR-2 of TA Instruments, and none of the viscosities values were higher than 50 % of the initial viscosity value measured at the same conditions.

At the time of manufacturing the MDF boards, components A, B and, if required, water in order to adjust the moisture of glued fibres, were mixed using a small high shear disperser for 5-10min.

The MDF pilot scale preparation conditions are described in Table 3, the MDF requirements according to UNE-EN 622-5: 2010 in Table 4, and the results obtained in Table 5.

MDF boards 1 / 2 made with formulation 1 fulfilled the requirements for structural board for use in both dry conditions (MDF.LA) and wet conditions (MDF.HLS) according to UNE-EN 622-5 (see Table 4). Additionally, all MDF boards showed an excellent thickness swelling (TS) with values below 6.5 %.

| **BOARDS** | **ADHESIVE MIXTURE** | **Length (cm)** | **Width (cm)** | **Thickness (mm)** | **Board Density (kg/m³)** | **% dry Component A on dry fiber** | **% dry Component B on dry fiber** |
|---|---|---|---|---|---|---|---|
| **1 / 2** | 1 | 22 | 22 | 16.7 | 750 | 21.0 | 0.97 |

**Table 3. MDF pilot scale preparation conditions with adhesive composition of Example 1**

| **BOARDS** | **ADHESIVE MIXTURE** | **Component A** | **Component B** | **Glued fibers moisture content (%)** | **Press time (s/mm)** | **Press Temperature (°c)** |
|---|---|---|---|---|---|---|
| **1 / 2** | 1 | 54.2 | 40 | 17.4 | 20.0 | 200 |

**Table 4. MDF requirements according to UNE-EN 622-5: 2010**

| | | | | **MDF REQUIREMENTS (UNE-EN 622-5)** | |
|---|---|---|---|---|---|
| | | | | **Board thickness (12-19mm)** | |
| **Property** | | **Norm** | **Units** | **Structural board for use in dry conditions (MDF.LA)** | **Structural board for use in humid conditions (MDF.HLS)** |
| **IB dry¹** | | EN 319 | N/mm² | 0.60 | 0.75 |
| **% TS 24h²** | | EN 317 | % | 12.0 | 8.0 |
| **Modulus of Rupture (MOR)³** | | EN 310 | N/mm² | 25 | 30 |
| **Modulus of Elasticity (MOE)³** | | EN 310 | N/mm² | 2500 | 2700 |
| **Option 1** | **% TS V-313⁴** | EN 317 / EN 321 | % | n/a | 15 |
| | **IB V-313⁴** | EN 319 / EN 321 | N/mm² | n/a | 0.20 |
| **Option 2** | **IB V-100⁵** | EN 319 / EN 1087-1 | N/mm² | n/a | 0.12 |

| | | | | | |
|---|---|---|---|---|---|
| ¹ Internal Bond according to EN 319; ² Thickness swelling % after 24h of water immersion at 20°C according to EN 317; ³ Modulus of Rupture and Elasticity according to EN 310; ⁴ Thickness swelling % and Internal bond after 3 water immersion-freezing-drying cycles (EN 321); ⁵ Internal bond after a boil-dry cycle V-100 (EN 1087-1) | | | | | |

**Table 5. MDF pilot plant results with adhesive composition of Example 1**

| **BOARDS** | **Thickness (mm)** | **Density (kg/m³)** | | **IB dry¹ (N/mm²)** | | **%TS 24h²** | | **IB V-100³ (N/mm²)** | |
|---|---|---|---|---|---|---|---|---|---|
| | | **Mean** | **Stdv** | **Mean** | **Stdv** | **Mean** | **Stdv** | **Mean** | **Stdv** |
| **1 / 2** | 16 | 761.6 | 16.4 | 0.84 | 0.08 | 6.16 | 0.40 | 0.19 | 0.03 |

| | | | | | | | | | |
|---|---|---|---|---|---|---|---|---|---|
| ¹ Internal Bond according to EN 319; ² Thickness swelling % according to EN 317; Internal bond after a boil-dry cycle V-100 according to EN 1087-1. Two boards per formulation were prepared. The results show the mean and standard deviation of 10 individual samples | | | | | | | | | |

### EXAMPLE 2. PARTICLEBOARD PILOT PLANT PREPARATION USING A MIMOSA BARK ADHESIVE

Three-layer particleboard were prepared in a pilot scale plant using the mimosa polyflavonoid-based adhesive compositions of Table 6, and formulations (the adhesive mixture of components A and B) of Table 7. In Table 6, the amount of vegetable oils is the sum of hydrogenate palm wax having an iodine value higher that 10 gr I₂/100 gr and soy oil, and additives is the sum of other compounds present in the adhesive composition of the invention, in particular, the sum of anionic surfactant obtained in situ by reaction of long chain fatty acids and diethanolamine, and non-ionic surfactant (i.e.: secondary alcohol ethoxylated). Each of the adhesive composition of Table 6 was used to obtain the formulation (i.e., adhesive mixture) of the same number in Table 7.

The mimosa extract used in the formulations was the same as described in Example 1.

**Table 6. Adhesive compositions of Example 2 for Particle board**

| **ADHESIVE COMPOSITIONS** | **Parts by weight** | | | |
|---|---|---|---|---|
| | **1** | | **2** | |
| | **Core Layer** | **Surface Layer** | **Core Layer** | **Surface Layer** |
| **MIMOSA EXTRACT** | 40.10 | 20.63 | 39.95 | 20.56 |
| **WATER** | 20.37 | 10.47 | 32.72 | 16.84 |
| **GLICEROL** | 14.58 | 7.50 | 14.45 | 7.44 |
| **VEGETABLE OILS** | 1.51 | 0.78 | 1.51 | 0.78 |
| **ADDITIVES** | 0.14 | 0.07 | 0.14 | 0.07 |

**Table 7. Formulation of Examples 2 for Pilot Scale Particle board**

| | **PARTICLEBOARDS ¹** | **1 / 2** | | **3 / 4** | | **5 / 6** | | **7 / 8** | | **9 / 10** | | **11 / 12** | |
|---|---|---|---|---|---|---|---|---|---|---|---|---|---|
| | **FORMULATIONS** | **1** | | **1** | | **1** | | **2** | | **2** | | **2** | |
| | | **Core Layer** | **Surface Layer** | **Core Layer** | **Surface Layer** | **Core Layer** | **Surface Layer** | **Core Layer** | **Surface Layer** | **Core Layer** | **Surface Layer** | **Core Layer** | **Surface Layer** |
| | | **Parts by weight** | | | | | | | | | | | |
| **Component A** | **Adhesive Compositions of the Invention** | 153.3 | 78.9 | 201.9 | 103.9 | 294.6 | 151.0 | 177.6 | 91.4 | 234.3 | 120.6 | 342.2 | 175.4 |
| **Component B** | **40% HEXAMINE WATER SOLUTION** | 15.0 | 7.7 | 20.1 | 10.3 | 29.6 | 15.0 | 15.0 | 7.7 | 20.1 | 10.3 | 29.4 | 15.1 |

| | | | | | | | | | | | | | |
|---|---|---|---|---|---|---|---|---|---|---|---|---|---|
| ¹ Two particleboard were prepared per each formulation. The amount of dry particles to prepare two boards ranged from 980 (board density of 650kg/m³) to 1210g (board density of 900kg/m³), where 65% by weight of the dried particles were used for the core layer and 35% by weight of the dried particles were used for the surface layer. | | | | | | | | | | | | | |

As an example, the preparation of the adhesive mixture corresponding to formulation 1 is described below.

### Component A for the core layer

0.053 g of long chain fatty acid and 0.053 g of diethanolamine were added to 2.12 g of water at a temperature of about 70 °C, and the aqueous mixture was stirred to obtain the ionic surfactant in situ by reaction with fatty acids. Subsequently, 1.36 g of melted hydrogenated palm wax having an iodine value higher that 10 gr I₂/100 gr, 0.15 g of soy oil and 0.038 g of the non-ionic surfactant, in particular a secondary alcohol ethoxylate, were gradually and sequentially added to the mixture while stirring and maintaining the temperature at about 70°C. After that, the heated mixture obtained was slowly cooled until reaching a temperature of 20-25°C. Then, 72,93 g of an aqueous glycerol solution comprising 54.8 wt.% of mimosa extract, previously prepared by dissolving 40.10 g of mimosa extract in solid form into 18.25 g of water and 14.58g of glycerol, was added to the mixture and it was stirred until homogenization. Finally, the mixture was stirred for 1h to obtain a uniform adhesive composition ready to be stored until use. Viscosity of this fresh adhesive composition (i.e., initial viscosity) was measured at 25°C and shear rate of 100 s⁻¹ in a Peltier-plate Rheometer DHR-2 of TA Instruments.

### Component B (40 wt.% hexamine solution)

A single preparation was made of 200 g of homogenous 40 wt. % hexamine solution, which was mixed with the 12 polyflavonoid-containing adhesive composition (2 formulations x 3 resin loading % x 2 layers) according to the amounts established in Table 7. For the preparation of this solution, a small disperser with high shear was used in order to maintain agitation throughout the process at a temperature from 20°C to 25°C. In these conditions, 80 g of hexamine were gradually added to 120 g of water and the mixture was stirred until the hardening composition was obtained.

All compositions prepared (components A and B) were duly identified, packed and storage for 2 weeks at a temperature from 20°C to 25°C before being use in the manufacturing of particleboards. After that time, the viscosity of these adhesive compositions was measured at 25°C and shear rate of 100 s⁻¹ in a Peltier-plate Rheometer DHR-2 of TA Instruments, and none of the viscosities values were higher than 50 % of the initial viscosity value measures at the same conditions.

**Table 8. Particleboard pilot scale preparation conditions with adhesive formulations of Example 2**

| | | | | | | | | | | **% Solids Content** | | | | | | | |
|---|---|---|---|---|---|---|---|---|---|---|---|---|---|---|---|---|---|
| | | | | | | **Core Layer** | | **Surface Layer** | | **Core Layer** | | **Surface Layer** | | **Glued fibers moisture content (%)** | | | |
| **BOARDS** | **Formulation** | **Length (cm)** | **Width (cm)** | **Thickness (mm)** | **Board density (kg/m³)** | **% Dry Component A on dry fiber** | **% Dry Component B on dry fiber** | **% Dry Component A on dry fiber** | **% Dry Component B on dry fiber** | **Component A** | **Component B** | **Component A** | **Component B** | **Core Layer** | **Surface Layer** | **Press time (s/mm)** | **Press Temperature (°C)** |
| 1 / 2 | 1 | 23.7 | 23.7 | 16.0 | 650 | 15.5 | 0.88 | 15.5 | 0.88 | 73.4 | 40.0 | 73.5 | 40.0 | 9.4 | 9.4 | 9.5 | 200 |
| 3 / 4 | 1 | 23.7 | 23.7 | 16.0 | 650 | 20.5 | 1.18 | 20.5 | 1.18 | 73.4 | 40.0 | 73.5 | 40.0 | 11.1 | 11.1 | 9.5 | 200 |
| 5 / 6 | 1 | 23.7 | 23.7 | 16.0 | 900 | 25.5 | 1.47 | 25.5 | 1.47 | 73.4 | 40.0 | 73.5 | 40.0 | 12.5 | 12.9 | 11.5 | 200 |
| 7 / 8 | 2 | 23.7 | 23.7 | 16.0 | 650 | 15.5 | 0.88 | 15.5 | 0.88 | 63.1 | 40.0 | 63.1 | 40.0 | 11.5 | 12.5 | 9.5 | 200 |
| 9 / 10 | 2 | 23.7 | 23.7 | 16.0 | 650 | 20.5 | 1.18 | 20.5 | 1.18 | 63.1 | 40.0 | 63.1 | 40.0 | 14.1 | 15.3 | 9.5 | 200 |
| 11 / 12 | 2 | 23.7 | 23.7 | 16.0 | 900 | 25.5 | 1.47 | 25.5 | 1.47 | 63.1 | 40.0 | 63.1 | 40.0 | 17.4 | 17.4 | 11.5 | 200 |

**Table 9. Particleboard requirements according to UNE-EN 312: 2010**

| | | | | **PARTICLEBOARD REQUIREMENTS (UNE-EN 312)** | | | | | | |
|---|---|---|---|---|---|---|---|---|---|---|
| | | | | **Board thickness (13-20mm)** | | | | | | |
| **Property** | | **Norm** | **Units** | **Type P1** | **Type P2** | **Type P3** | **Type P4** | **Type P5** | **Type P6** | **Type P7** |
| **IB dry¹** | | EN 319 | N/mm² | 0.24 | 0.35 | 0.45 | 0.35 | 0.45 | 0.50 | 0.70 |
| **% TS 24h²** | | EN 317 | % | n/a | n/a | 14.0 | 15.0 | 10.0 | 15.0 | 10.0 |
| **Modulus of Rupture (MOR)³** | | EN 310 | N/mm² | 10 | 11 | 14 | 15 | 16 | 18 | 20 |
| **Modulus of Elasticity (MOE)³** | | EN 310 | N/mm² | n/a | 1600 | 1950 | 2300 | 2400 | 3000 | 3100 |
| **Surface Soundness (SS)⁴** | | EN 311 | N/mm² | n/a | 0.8 | n/a | n/a | n/a | n/a | n/a |
| **Option 1** | **% TS V-313⁵** | EN 317 / EN 321 | % | n/a | n/a | 13.0 | n/a | 12.0 | n/a | 11.0 |
| | **IB V-313⁵** | EN 319 / EN 321 | N/mm² | n/a | n/a | 0.13 | n/a | 0.22 | n/a | 0.36 |
| **Option 2** | **IB V-100⁶** | EN 319 / EN 1087-1 | N/mm² | n/a | n/a | 0.08 | n/a | 0.14 | n/a | 0.23 |

| | | | | | | | | | | |
|---|---|---|---|---|---|---|---|---|---|---|
| ¹ Internal Bond according to EN 319; ² Thickness swelling % after 24h of water immersion at 20°C according to EN 317; ³ Modulus of Rupture and Elasticity according to EN 310; ⁴ Surface soundness according to EN 311: 2002; ⁵ Thickness swelling % and Internal bond after 3 water immersion-freezing-drying cycles (EN 321); ⁶ Internal bond after the boil-dry cycle V-100 (EN 1087-1) | | | | | | | | | | |

**Table 10. Particleboard pilot plant results with Adhesive Formulations of Example 2**

| **BOARDS** | **Thickness (mm)** | **Density (Kg/m³)** | | **IB dry¹ (N/mm²)** | | **%TS 24h²** | | **IB V-100³ (N/mm²)** | |
|---|---|---|---|---|---|---|---|---|---|
| | | **Mean** | **Stdv** | **Mean** | **Stdv** | **Mean** | **Stdv** | **Mean** | **Stdv** |
| 1 / 2 | 16.0 | 693 | 10 | 0.76 | 0.05 | 8.25 | 0.85 | 0.08 | 0.00 |
| 3 / 4 | 16.0 | 672 | 7 | 0.97 | 0.02 | 8.33 | 0.95 | 0.23 | 0.03 |
| 5 / 6 | 16.0 | 900 | 2 | 1.8 | 0.03 | 8.98 | 0.12 | 1.03 | 0.02 |
| 7 / 8 | 16.0 | 685 | 5 | 0.78 | 0.02 | 8.25 | 0.08 | 0.05 | 0.01 |
| 9 / 10 | 16.0 | 660 | 8 | 0.71 | 0.01 | 9.27 | 0.29 | 0.11 | 0.01 |
| 11 / 12 | 16.0 | 900 | 7 | 1.86 | 0.04 | 9.00 | 0.28 | 1.02 | 0.02 |

| | | | | | | | | | |
|---|---|---|---|---|---|---|---|---|---|
| ¹ Internal Bond according to EN 319; ² Thickness swelling % according to EN 317; ³ Internal bond after the boil-dry cycle V-100 (EN 1087-1). Two boards per formulation were prepared. The results show the mean and standard deviation of 10 individual samples | | | | | | | | | |

The particleboard pilot scale preparation conditions are described in Table 8, the particleboard requirements according to UNE-EN 312: 2010 in Table 9 and the results obtained in Table 10. Only the dry internal bond, the thickness swelling and the internal bond after the V-100 cycle were analysed.

At the time of manufacturing the particleboards, components A, B and, if required, water in order to adjust the moisture of glued fibres, were mixed using a small high shear disperser for 5min to 10min in order to obtain the corresponding adhesive mixture, also called formulation herein.

As it can be seen in Table 10, all boards showed an average dry internal bond and thickness swelling that would satisfy the strictest requirements for type P7 (IBdry ≥0.70 N/mm² and TS ≤ 10%). On the other hand, boards 1 / 2 (Formulation 1) and 9 / 10 (Formulation 2) showed an average internal bond after the V-100 cycle that would satisfy the requirements for type P3 (IB V-100 ≥ 0.08 N/mm²). Moreover, boards 3 / 4 and 5 / 6, made with Formulation 1, and 11 / 12 (Formulation 2) showed an average internal bond, after the V-100 cycle, that would satisfy the strictest requirements for type P7 (IB V-100 ≥ 0.23 N/mm²).

### EXAMPLE 3: Stability of adhesive compositions

With the aim to check the stability of adhesive compositions according to the invention, some compositions comprising a combination of palm oil and soy oil as hydrophobic agent and glycerol as humectant agent and a mixture of surfactants as described in Example 2 have been stored at 20 °C. Additionally, comparative formulations comprising mimosa extract, water and, optionally, glycerol, were also prepared and stored at the same temperature. The viscosity of these compositions has been periodically measured at 25°C and shear rate of 100 s⁻¹ in a Peltier-plate Rheometer DHR-2 of TA Instruments.

Mimosa polyphenolic-based adhesive compositions prepared are described in Table 11, and results obtained are reported in Table 12. Ingredients of these composition are as described in Example 2 (see above).

**Table 11: Adhesive compositions according to the invention and comparative adhesive compositions (*) for the stability study**

| **ADHESIVE COMPOSITIONS** | **Parts by weight** | | | | | | | |
|---|---|---|---|---|---|---|---|---|
| | **1(*)** | **2(*)** | **3(*)** | **4** | **5** | **6(*)** | **7** | **8** |
| **MIMOSA EXTRACT** | 55.0 | 47.0 | 55.0 | 55.0 | 55.0 | 47.0 | 47.0 | 47.0 |
| **WATER** | 45.0 | 53.0 | 25.0 | 27.8 | 30.6 | 36.0 | 38.8 | 41.6 |
| **GLYCEROL** | 0.0 | 0.0 | 20.0 | 20.0 | 20.0 | 17.0 | 17.0 | 17.0 |
| **VEGETABLE OILS** | 0.0 | 0.0 | 0.0 | 2.0 | 4.0 | 0.0 | 2.0 | 4.0 |
| **ADDITIVES** | 0.0 | 0.0 | 0.0 | 0.19 | 0.38 | 0.0 | 0.19 | 0.38 |

**Table 12: Viscosity of adhesive compositions over time**

| | **Period of storage (days)** | | | | | |
|---|---|---|---|---|---|---|
| **Viscosity of the composition (cP, 25°C, 100 ⁻¹)** | 0 | 14 | 28 | 42 | 56 | 70 |
| 1 (*) | 529 | 531 | 532 | 534 | 533 | 535 |
| 2(*) | 206 | 206 | 207 | 208 | 210 | 209 |
| 3(*) | 7424 | 7436 | 7440 | 7445 | 7447 | 7450 |
| 4 | 1973 | 1971 | 1975 | 1982 | 1977 | 1979 |
| 5 | 1690 | 1694 | 1692 | 1700 | 1698 | 1701 |
| 6(*) | 374 | 370 | 376 | 378 | 375 | 373 |
| 7 | 323 | 322 | 324 | 327 | 321 | 323 |
| 8 | 276 | 275 | 277 | 280 | 276 | 275 |

All of the adhesive compositions according to the invention remained stable for at least 70 days, since no separation of phases was observed and viscosity increment remained far below 50 % of the initial viscosity for all compositions.

These results also show the viscosity reduction effect of vegetable oils present in the adhesive composition of the invention. Thus, formulation 3 (i.e., a mixture of bio-adhesive, glycerol and water) has a viscosity of 7424 cP at 25°C and 100 s⁻¹; whereas formulations 4 and 5 according to the invention have a viscosity of 2240 cP (2.0 wt.% vegetable oils) and 1680 cP (4.0 wt.% vegetable oils), respectively.

### EXAMPLE 4: Wetting ability of adhesive compositions

With the aim to check the wetting ability of adhesive compositions according to the invention, the surface tension was measured at 25°C in a Dognon Abribat Tensiometer according to the Wilhelmy plate method.

Mimosa polyphenolic-based adhesive compositions prepared are described in Table 11, and results obtained are reported in Table 13. Ingredients of these compositions are as described in Example 2 (see above).

Considering that water has a surface tension of 71 mN/m (measured in the Dognon Abribat Tensiometer at 25°C), all the adhesive compositions showed a remarkable reduction in surface tension. This lower surface tension is critical to improve the wetting of the wood fibers and chips during the spreading of the adhesive in the preparation of MDF and particleboards. This better wetting will also facilitate adhesive penetration into the wood fiber providing a better adhesion and improved water resistance.

As it can be seen in Table 13, the presence of mimosa extract reduces the surface tension to 60.1 mN/m (Formulation 1) and 54.2 mN/m (Formulation 2). The glycerol further reduces the surface tension to 57.3 mN/m (Formulation 3 vs 1) and 51.0 mN/m (Formulation 6 vs 2). Finally, the vegetable oils and the additives combined reduces even further the surface tension to 40.0 mN/m and 34.0 mN/m (Formulations 4 and 5 vs 3) and 35.5 mN/m and 31.5 mN/m (Formulation 7 and 8 vs 6).

**Table 13. Surface tension of adhesive compositions of Table 11, only adhesive composition 4, 5, 7 and 8 are according to the invention**

| **Adhesive Composition** | 1 (*) | 2(*) | 3(*) | 4 | 5 | 6(*) | 7 | 8 |
|---|---|---|---|---|---|---|---|---|
| **Surface Tension (mN/m, 25°C)** | 60.1 | 54.2 | 57.3 | 40.0 | 34.0 | 51.0 | 35.5 | 31.5 |

## Claims

1. An adhesive composition **characterized in that** it comprises:
- at least one bio-based adhesive, wherein said bio-based adhesive is a polyflavonoid-based polymer,
- at least one surfactant selected from anionic and non-ionic surfactants,
- at least one hydrophobic agent,
- at least one humectant agent comprising at least three hydroxyl groups; and
- water.

2. The adhesive composition of claim 1, comprising at least one vegetable extract comprising polyflavonoids.

3. The adhesive composition of claim 2, wherein said vegetable extract is selected from mimosa bark extract, quebracho wood extract, hemlock bark extract, sumach bark extract, pine bark extract, pecan nut pith extract, Douglas fir bark extract and a combination thereof, preferably it is selected from mimosa bark extract, pecan nut pith extract, pine bark extract and a combination thereof.

4. The adhesive composition of any one of claims 2-3, wherein the Stiasny number of the vegetable extract is higher than 65%, preferably equal to or higher than 75%.

5. The adhesive composition of any one of claims 1 to 4, wherein the hydrophobic agent is selected from
- paraffin,
- a vegetable oil selected from hydrogenated or partially hydrogenated palm oil, soy oil and a combination thereof, and
- a combination of paraffin oil and vegetable oil.

6. The adhesive composition of any one of claims 1 to 5, wherein the humectant agent is a polyol of general formula CₙH₂ₙ₊₂Oₙ, wherein n is an integer equal to or higher than 3, preferably of 3 to 6, more preferably of 3 to 5.

7. The adhesive composition of any one of claims 2 to 6, comprising:
- 28 wt.% to 55 wt.% of at least one vegetable extract comprising polyflavonoids;
- 0.002 wt.% to 0.5 wt.% of at least one surfactant selected from anionic and non-ionic surfactants, the surfactant being added as such or obtained in situ by addition of a base, preferably between 0.001 wt.% to 0.3 wt.% of ethanolamine,
- 0.5 wt.% to 8 wt.% of at least one hydrophobic agent;
- 0.5 wt. to 20 wt.% of at least one humectant agent comprising at least three hydroxyl groups; and
- 25 wt.% to 65 wt.% of water;
wherein all amounts are expressed by weight in respect to the total weight of the adhesive composition, and the sum of these amounts is equal to or lower than 100 %.

8. An adhesive system **characterized in that** it comprises, isolated one of another:
- Component A: the adhesive composition as defined in any one of claims 1 to 7, and
- Component B: at least one hardener agent, preferably the at least one hardener agent is comprised in a hardening composition further comprising water.

9. The adhesive system of claim 8, wherein component A is the adhesive composition as defined in any one of claims 1 to 7, and the hardener agent is selected from hexamine, tris(hydroxymethyl)nitromethane, glyoxal, Lewis acids, 2,5-dihydroxymethylfuran, 2,5-dihydroxymethylfuran moieties, polyethyleneimine (PEI) and any combination thereof, preferably hexamine.

10. The adhesive system of claim 9, comprising:
- Component A: the adhesive composition as defined in claim 7, and
- Component B: the hardening composition comprising: 2 to 12 parts by weight of hexamine, wherein the hexamine is comprised in an aqueous solution with a concentration between 30 wt.% 42 wt.%, and
the amount of hexamine is expressed as parts by weight with respect to 100 parts by weight of solid content of the vegetable extract present in the adhesive composition.

11. An adhesive mixture comprising component A and component B as defined in any one of claims 8 to 10.

12. Use of the adhesive composition as defined in any one of claims 1 to 7, the adhesive system as defined in any one of claims 8 to 10 or the adhesive mixture as defined in claim 11 for manufacturing wood composite boards, preferably fibreboards, particleboards, chipboards, plywood, paperboards or oriented strand board; or fibreglass insulations or rock wool insulations; or woven or non-woven fibre mats for compressing molding and the resulting composites.

13. Wood composite boards comprising lignocellulosic wood material adhered by an adhesive mixture as defined in claim 11.

14. Wood composite board of claim 13, wherein the wood composite board is a MDF board which at least complies with the requirements for structural board for use in dry conditions (MDF.LA) according to UNE-EN 622-5: 2010; and, preferably, said MDF boards also comply with the requirements for structural board for use in humid conditions (MDF.HLS) according to UNE-EN-622.5: 2010.

15. Wood composite board of claim 13, wherein the wood composite board is a particleboard which at least complies with the requirements for category P1, P2 or P4 according to UNE-EN-312: 2010; and preferably also complies with the requirements for category P3, P5 or P7 according to UNE-EN-312:2010.

## Patentansprüche

1. Klebstoffzusammensetzung, **dadurch gekennzeichnet, dass** sie umfasst:
- mindestens einen biobasierten Klebstoff, wobei der biobasierte Klebstoff ein Polymer auf Polyflavonoidbasis ist,
- mindestens ein Tensid, ausgewählt aus anionischen und nichtionischen Tensiden,
- mindestens ein hydrophobes Mittel,
- mindestens ein Feuchthaltemittel, umfassend mindestens drei Hydroxylgruppen; und
- Wasser.

2. Klebstoffzusammensetzung nach Anspruch 1, umfassend mindestens einen Pflanzenextrakt, der Polyflavonoide umfasst.

3. Klebstoffzusammensetzung nach Anspruch 2, wobei der Pflanzenextrakt ausgewählt ist aus Mimosenrindenextrakt, Quebrachoholzextrakt, Hemlockrindenextrakt, Sumachrindenextrakt, Kiefernrindenextrakt, Pekannussmarkextrakt, Douglasienrindenextrakt und einer Kombination davon, vorzugsweise ist er ausgewählt aus Mimosenrindenextrakt, Pekannussmarkextrakt, Kiefernrindenextrakt und einer Kombination davon.

4. Klebstoffzusammensetzung nach einem der Ansprüche 2 bis 3, wobei die Stiasny-Zahl des Pflanzenextrakts höher als 65% ist, vorzugsweise gleich oder höher als 75%.

5. Klebstoffzusammensetzung nach einem der Ansprüche 1 bis 4, wobei das hydrophobe Mittel ausgewählt ist aus
- Paraffin,
- einem Pflanzenöl, ausgewählt aus hydriertem oder teilweise hydriertem Palmöl, Sojaöl und einer Kombination davon, und
- einer Kombination aus Paraffinöl und Pflanzenöl.

6. Klebstoffzusammensetzung nach einem der Ansprüche 1 bis 5, wobei das Feuchthaltemittel ein Polyol der allgemeinen Formel CₙH₂ₙ₊₂Oₙ ist, wobei n eine ganze Zahl gleich oder größer als 3, vorzugsweise von 3 bis 6, bevorzugter von 3 bis 5, ist.

7. Klebstoffzusammensetzung nach einem der Ansprüche 2 bis 6, umfassend:
- 28 Gew.-% bis 55 Gew.-% mindestens eines Pflanzenextrakts, der Polyflavonoide umfasst;
- 0.002 Gew.-% bis 0.5 Gew.-% mindestens eines Tensids, ausgewählt aus anionischen und nichtionischen Tensiden, wobei das Tensid als solches zugesetzt oder in situ durch Zugabe einer Base erhalten wird, vorzugsweise zwischen 0.001 Gew.-% bis 0.3 Gew.-% Ethanolamin,
- 0.5 Gew.-% bis 8 Gew.-% mindestens eines hydrophoben Mittels;
- 0.5 Gew.-% bis 20 Gew.-% mindestens eines Feuchthaltemittels, welches mindestens drei Hydroxylgruppen umfasst; und
- 25 Gew.-% bis 65 Gew.-% Wasser;
wobei alle Mengen gewichtsmäßig bezogen auf das Gesamtgewicht der Klebstoffzusammensetzung ausgedrückt sind und die Summe dieser Mengen gleich oder niedriger als 100 % ist.

8. Klebstoffsystem, **dadurch gekennzeichnet, dass** es, voneinander getrennt, umfasst:
- Komponente A: die Klebstoffzusammensetzung wie in einem der Ansprüche 1 bis 7 definiert, und
- Komponente B: mindestens ein Härtermittel, wobei vorzugsweise das mindestens eine Härtermittel in einer Härterzusammensetzung enthalten ist, die ferner Wasser umfasst.

9. Klebstoffsystem nach Anspruch 8, wobei Komponente A die Klebstoffzusammensetzung ist, wie in einem der Ansprüche 1 bis 7 definiert, und das Härtermittel ausgewählt ist aus Hexamin, Tris(hydroxymethyl)nitromethan, Glyoxal, Lewis-Säuren, 2,5-Dihydroxymethylfuran, 2,5-Dihydroxymethylfuran-Einheiten, Polyethylenimin (PEI) und einer beliebigen Kombination davon, vorzugsweise Hexamin.

10. Klebstoffsystem nach Anspruch 9, umfassend:
- Komponente A: die Klebstoffzusammensetzung wie in Anspruch 7 definiert, und
- Komponente B: die Härterzusammensetzung, umfassend: 2 bis 12 Gewichtsteile Hexamin, wobei das Hexamin in einer wässrigen Lösung mit einer Konzentration zwischen 30 Gew.-% 42 Gew.-% enthalten ist, und
die Menge an Hexamin als Gewichtsteile bezogen auf 100 Gewichtsteile des Feststoffgehalts des in der Klebstoffzusammensetzung vorhandenen Pflanzenextrakts ausgedrückt ist.

11. Klebstoffmischung, umfassend Komponente A und Komponente B wie in einem der Ansprüche 8 bis 10 definiert.

12. Verwendung der Klebstoffzusammensetzung wie in einem der Ansprüche 1 bis 7 definiert, des Klebstoffsystems wie in einem der Ansprüche 8 bis 10 definiert oder der Klebstoffmischung wie in Anspruch 11 definiert zur Herstellung von Holzverbundplatten, vorzugsweise Faserplatten, Spanplatten, Holzspanplatten, Sperrholzplatten, Pappen oder OSB-Platten oder von Glasfaserdämmstoffen oder Steinwolledämmstoffen oder von gewebten oder nichtgewebten Fasermatten zum Formpressen und den daraus resultierenden Verbundwerkstoffen.

13. Holzverbundplatte, umfassend lignocellulosisches Holzmaterial, das durch eine Klebstoffmischung wie in Anspruch 11 definiert verklebt ist.

14. Holzverbundplatte nach Anspruch 13, wobei die Holzverbundplatte eine MDF-Platte ist, die mindestens die Anforderungen an Platten für tragende Zwecke zur Verwendung im Trockenbereich (MDF. LA) gemäß UNE-EN 622-5: 2010 erfüllt und wobei die MDF-Platte vorzugsweise auch die Anforderungen an Platten für tragende Zwecke zur Verwendung im Feuchtbereich (MDF.HLS) gemäß UNE-EN-622.5: 2010 erfüllt.

15. Holzverbundplatte nach Anspruch 13, wobei die Holzverbundplatte eine Spanplatte ist, die mindestens die Anforderungen an Kategorie P1, P2 oder P4 gemäß UNE-EN-312: 2010 erfüllt und vorzugsweise auch die Anforderungen an Kategorie P3, P5 oder P7 gemäß UNE-EN-312:2010 erfüllt.

## Revendications

1. Composition adhésive, **caractérisée en ce qu'**elle comprend :
- au moins un adhésif d'origine biologique, lequel adhésif d'origine biologique est un polymère à base de polyflavonoïde,
- au moins un tensioactif choisi parmi les tensioactifs anioniques et non-ioniques,
- au moins un agent hydrophobe,
- au moins un agent humectant comprenant au moins trois groupes hydroxyle ; et
- de l'eau.

2. Composition adhésive selon la revendication 1, comprenant au moins un extrait végétal comprenant des polyflavonoïdes.

3. Composition adhésive selon la revendication 2, dans laquelle ledit extrait végétal est choisi parmi l'extrait d'écorce de mimosa, l'extrait de bois de quebracho, l'extrait d'écorce de pruche, l'extrait d'écorce de sumac, l'extrait d'écorce de pin, l'extrait de moelle de noix de pécan, l'extrait d'écorce de sapin de Douglas, et leurs combinaisons, de préférence est choisi parmi l'extrait d'écorce de mimosa, l'extrait de moelle de noix de pécan, l'extrait d'écorce de pin et leurs combinaisons.

4. Composition adhésive selon l'une quelconque des revendications 2 et 3, dans laquelle le nombre de Stiasny de l'extrait végétal est supérieur à 65 %, de préférence égal ou supérieur à 75 %.

5. Composition adhésive selon l'une quelconque des revendications 1 à 4, dans laquelle l'agent hydrophobe est choisi parmi
- la paraffine,
- une huile végétale choisie parmi l'huile de palme hydrogénée ou partiellement hydrogénée, l'huile de soja, et leurs combinaisons, et
- une combinaison d'huile de paraffine et d'huile végétale.

6. Composition adhésive selon l'une quelconque des revendications 1 à 5, dans laquelle l'agent humectant est un polyol de formule générale CₙH₂ₙ₊₂Oₙ dans laquelle n est un entier égal ou supérieur à 3, de préférence de 3 à 6, mieux encore de 3 à 5.

7. Composition adhésive selon l'une quelconque des revendications 2 à 6, comprenant :
- 28 % en poids à 55 % en poids d'au moins un extrait végétal comprenant des polyflavonoïdes ;
- 0,002 % en poids à 0,5 % en poids d'au moins un tensioactif choisi parmi les tensioactifs anioniques et non-ioniques, le tensioactif étant ajouté tel quel ou obtenu in situ par addition d'une base, de préférence entre 0,001 % en poids et 0,3 % en poids d'éthanolamine,
- 0,5 % en poids à 8 % en poids d'au moins un agent hydrophobe ;
- 0,5 % en poids à 20 % en poids d'au moins un agent humectant comprenant au moins trois groupes hydroxyle ; et
- 25 % en poids à 65 % en poids d'eau ;
dans laquelle toutes les quantités sont exprimées en poids par rapport au poids total de la composition adhésive, et la somme de ces quantités est égale ou inférieure à 100 %.

8. Système adhésif **caractérisé en ce qu'**il comprend, isolés les uns des autres :
- un composant A : la composition adhésive telle que définie dans l'une quelconque des revendications 1 à 7, et
- un composant B : au moins un agent durcisseur, de préférence l'au moins un agent durcisseur étant compris dans une composition durcissante comprenant en outre de l'eau.

9. Système adhésif selon la revendication 8, dans lequel le composant A est la composition adhésive telle que définie dans l'une quelconque des revendications 1 à 7, et l'agent durcisseur est choisi parmi l'hexamine, le tris(hydroxyméthyl)nitrométhane, le glyoxal, les acides de Lewis, le 2,5-dihydroxyméthylfurane, les fragments 2,5-dihydroxyméthylfurane, la polyéthylène-imine (PEI) et l'une quelconque de leurs combinaisons, de préférence l'hexamine.

10. Système adhésif selon la revendication 9, comprenant :
- un composant A : la composition adhésive telle que définie dans la revendication 7, et
- un composant B : la composition durcissante comprenant : 2 à 12 parties en poids d'hexamine, laquelle hexamine est comprise dans une solution aqueuse à une concentration comprise entre 30 % en poids et 42 % en poids, et
la quantité d'hexamine étant exprimée en parties en poids pour 100 parties en poids de la teneur en solides de l'extrait végétal présent dans la composition adhésive.

11. Mélange adhésif comprenant le composant A et le composant B tels que définis dans l'une quelconque des revendications 8 à 10.

12. Utilisation de la composition adhésive telle que définie dans l'une quelconque des revendications 1 à 7, du système adhésif tel que défini dans l'une quelconque des revendications 8 à 10 ou du mélange adhésif tel que défini dans la revendication 11 pour fabriquer des panneaux composites en bois, de préférence des panneaux de fibres, des panneaux de particules, des panneaux d'agglomérés, des contreplaqués, des cartons ou des panneaux à copeaux orientés ; ou des isolants en fibres de verre ou des isolants en laine de roche ; ou des nappes de fibres tissées ou non tissées destinées au moulage par compression, ainsi que des composites qui en résultent.

13. Panneaux composites en bois comprenant un matériau lignocellulosique à base de bois encollé au moyen d'un mélange adhésif tel que défini dans la revendication 11.

14. Panneau composite en bois selon la revendication 13, lequel panneau composite en bois est un panneau MDF qui satisfait au moins aux exigences relatives aux panneaux structurels pour une utilisation en milieu sec (MDF.LA) conformément à la norme UNE-EN 622-5:2010 ; et, de préférence, ledit panneau MDF satisfait également aux exigences relatives aux panneaux structurels pour une utilisation en milieu humide (MDF.HLS) conformément à la norme UNE-EN 622-5:2010.

15. Panneau composite en bois selon la revendication 13, lequel panneau composite en bois est un panneau de particules qui satisfait au moins aux exigences pour la catégorie P1, P2 ou P4 conformément à la norme UNE-EN-312:2010 ; et de préférence également satisfait aux exigences relatives à la catégorie P3, P5 ou P7 conformément à la norme UNE-EN-312:2010.
